# EUROPEAN PATENT APPLICATION

(11) **EP 0 814 406 A1**
(43) Date of publication of application: **29.12.1997**
(21) Application number: 96109859.7
(22) Date of filing: 19.06.1996
(51) Int. Cl.: G06F 12/10

(54) **Method and apparatus for transforming a virtual address**

(71) Applicant: MOTOROLA, INC., Schaumburg, IL 60196 (US)
(72) Inventor: Katz, Adi, Holon 58261 (IL); Gabay, Yosef, Petach Tikva (IL); Pinchas, Liviu, Ramat Gan 52391 (IL)
(74) Representative: Richardt, Markus Albert

(57) **Abstract**

For transforming a virtual address into a physical address the physical page address of a previous translation is combined with the current offset. This combined address information is outputted to access an external device or a functional unit such as a cache memory or a bus. Only in relatively rare cases the page addresses change from one mutual address to the other in a stream of virtual addresses. If such a change should occur the correct physical page address together with the offset is outputted subsequent to the output of the "wrong" physical address. In average this results in a dramatic increase of system throughput due to shorter access times.

## Description

### Background of the Invention

This invention relates to a method and an electronic circuit for transforming a virtual address. Further, it relates to an electronic system which incorporates such an electronic circuit.

### II. Description of the prior art

The usage of a virtual address space is a technique which is widely used in the micro electronics and computer technologies. A virtual address space is usually divided into pages; a virtual address comprises a virtual page address and an offset. The virtual page address is mapped by a memory management unit, frequently referred to as MMU, to a physical page address. The physical page address is recombined with the offset to give a physical address which indicates a location in physical memory, such as random access memory (RAM).

The memory management unit contains a page table which is indexed, possibly associatively, by the virtual page addresses. Each page table entry gives the physical page address corresponding to the virtual one.

Virtual memory is usually much larger than physical memory. Paging allows the exess to be stored on disc and copied to RAM as required. This makes it possible to run programs whose code plus data size is greater than the amount of RAM available. This is known as "demand paged virtual memory". A page is copied from disc to main memory when an attempt is made to access it and it is not already present. This paging is performed automatically by collaboration between the central processing unit, the memory management unit and the operating system.

The usage of a translation look-aside buffer is a commonly known technique in a virtual memory system. A translation look-aside buffer lists the physical page address associated with each virtual page address. A translation look-aside buffer is often used in conjunction with a cache memory whose tags are based on virtual addresses, i.e. set associative caches. The virtual address is presented simultaneously to the translation look-aside buffer and to the cache so that the cache access and virtual to physical address translation can proceed in parallel; with other words the translation is done "on the side". If the requested address is not cached then the physical address is used to locate the data in main memory. An alternative is to place the translation look-aside buffer between the cache and main memory so that it is only activated once there was a cache miss.

From the European Patent Application Number 0229253 a data processor with virtual memory management is known. The data processor includes a central processing unit adapted to execute a virtual memory management. The central processing unit includes translation look-aside buffers for translating a given virtual address into a corresponding real address. The translation look-aside buffer has such a function as to generate a distinction signal indicating whether the translated real address designates a main memory or an external input/output device.

A problem which is generally encountered in the prior art is that the speed of the translation of a virtual address to a physical address is crucial for the performance of the system.

It is therefore an object of the present invention to provide an improved method and circuit for translating the virtual address to a physical address. Furthermore, it is an object of the present invention to provide an improved electronic system having a virtual address scheme.

### Summary of the Invention

The objects of the invention are solved basically by applying the features laid down in the independent claims.

The present invention makes usage of the fact that the offset of a virtual address is invariant with respect to the translation of the virtual address to its corresponding physical address. What is changed in the process of translating the virtual address is only the virtual page address. In a lot of environments it is likely that subsequent virtual addresses have the same virtual page address and thus also the same physical page address. Especially in an instruction stream there is a high probability that the current instruction address is on the same page as the previous instruction address.

In such an environment the present invention is particularly advantageous since it is based on the assumption that in a lot of cases the previous page address and the current page address are the same.

Another advantage of the invention is that in most cases the translation of a virtual address, for example by means of an translation look-aside buffer, does not cause a time penalty for the performance of the electronic system. This is due to the fact that in most environments only in relatively rare cases the assumption that the previous page address is not the same as the current page address is not correct. If such a situation should occur the correct physical address of the current virtual address is outputted subsequently and any external device to which the electronic circuit is connected such as a cache or a bus is notified about this situation. In case of a cache access for example the cache access which started based on the "wrong" physical page address is halted when shortly after the "wrong" page address the correct page address is outputted for cache access.

Another advantage of the invention is that there is no restriction on the type of cache memory which is used. As opposed to the prior art for a translation "on the side" no set associative cache is required but any type of cache organization is usable. This is due to the fact that a full address including offset and page address is available right at the start of the cache access.

Also the invention is advantageous in an environment when the processor directly wants to access the system bus or another electronic device which requires the full physical address right at the start of the operation. Such an access is made possible by the invention since during the translation in the translation look-aside buffer there is already a full physical address available including both offset and physical page address.

### Brief Description of the Drawing

FIG. 1 is a block diagram illustrating an electronic circuit and an electronic system according to the invention; and
FIG. 2 is a flow diagram of a method according to the invention.

### Detailed Description of the invention

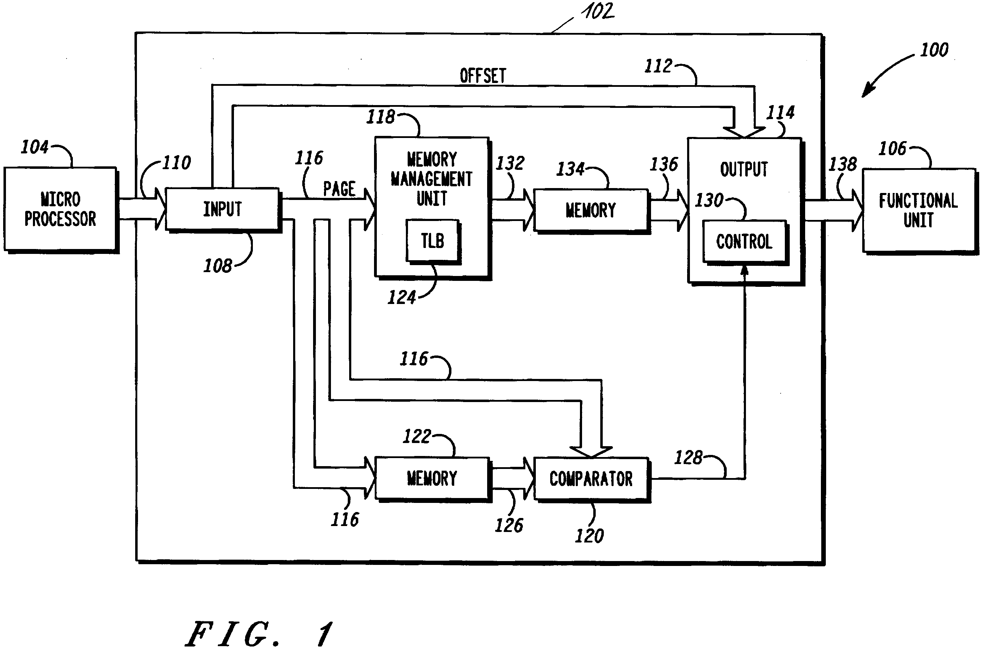

FIG.1 shows an electronic system 100 of the invention. The electronic system 100 can be embedded in a computer or other micro electronic device, such as a cellular telephone or a personal digital assistant. The electronic system 100 comprises an electronic circuit 102 which is designed according to the principals of the invention as well as a micro processor 104 and a functional unit 106. The electronic system can contain a vast plurality of other components such as displays, signal processors for speech processing and other purposes, power management and other devices which are not shown in FIG. 1.

The micro processor 104 is coupled to input 108 of the electronic circuit 102 via the address bus 110. If the micro processor 104 sends a virtual address via the address bus 110 to the input 108, the input 108 separates the virtual page address and the offset of the current virtual address. The offset is transmitted via the internal bus 112 to output 114 of the electronic system 100. The virtual page address is transmitted via the internal bus 116 to memory management unit (MMU) 118, comparator 120 and memory 122.

The memory management unit 118 serves as a means for translating the current virtual page address to its corresponding physical page address. For this purpose the memory management unit 118 incorporates a translation look-aside buffer (TLB) 124. The design of a memory management unit and a translation look-aside buffer as such is well known from the prior art.

The comparator 120 is also connected to the memory 122 via the internal bus 126. The memory 122 serves as a storage means for storing of a previous virtual page address. The comparator 120 compares the current virtual page address which is present on the internal bus 116 and the previous virtual page address which is present on the internal bus 126. If there is a mismatch between the current virtual page address and the previous virtual page address the comparator 120 issues a control signal via control line 128 to control logic 130. The control logic 130 is comprised in the output 114.

The output of the memory management unit 118 is connected via the internal bus 132 to the memory 134. The memory 134 serves as a storage means for storing a translated previous physical page address. The output of memory 134 is connected via the internal bus 136 to the output 114. Hence, memory 134 serves to buffer the result of a previous translation of a virtual page address whereas memory 122 serves to buffer the previous virtual page address itself.

The output 114 is connected via the address bus 138 to functional unit 106. In this case the functional unit 106 is a cache memory. In general terms the functional unit 106 can be any device which requires a physical address for an access operation. Hence the functional unit 106 can also be a bus to connect the micro processor 104 via the electronic circuit 102 to other devices of the electronic system.

When the micro processor 104 needs access to the functional unit 106 it issues a corresponding virtual address which is transmitted via the address bus 110 to the input 108. The offset of this current virtual address is transmitted via the internal bus 112 to the output 114. Within the output 114 the present offset is combined with the physical page address of the previous virtual address which was issued by the micro processor 104 and transmitted via the address bus 110 before the current virtual address.

The combined current offset and the previous physical page address are outputted via the address bus 138 to the functional unit 106 to initiate an access operation. At the same time the virtual page address of the current virtual address is transmitted via the internal bus 116 to the memory management unit 118, the comparator 120 and the memory 122. By means of its translation look-aside buffer 124 the memory management unit 118 translates the virtual page address of the current virtual address to its corresponding physical page address. Also at the same time the comparator 120 compares the virtual page address of the current virtual address to the previous virtual page address which is buffered in memory 122 and present on the internal bus 126. By the time the translation in the memory management unit 118 and the comparison in comparator 120 are carried out simultaneously, the output of the physical address comprising the offset of the current virtual address and the physical page address of the previous virtual address is already accomplished by the input 114 via the address bus 138. As soon as the functional unit 106 receives this physical address via the address bus 138, the internal access operation within the functional unit 106 to access data corresponding to the physical address can begin.

After the translation is carried out by the memory management unit 118 the result is transmitted via the internal bus 132 to the memory 134 so that the previous physical page address is replaced by the current physical page address in the memory 134. If the comparator 120 finds a mismatch between the current and previous virtual page addresses, it issues the control signal via the control line 128 to the control logic 130.

If the control signal is received by the control logic 130, this signals to the control logic 130 that the physical address which has already been transmitted via the address bus 138 to the functional unit 106 is "wrong" and that the previous and the current page addresses are different. As a consequence the current offset which is present on the internal bus 112 is combined with the current physical page address which is stored now in the memory 134 and which is also present on the internal bus 136 under the control of control logic 130. Subsequently the output 114 outputs another physical address which is the combined current physical page address and the current offset via the address bus 138 to the functional unit 106. The reception of another physical address only shortly after the reception of the first physical address in the functional unit 106 results in an interruption of the present access operation of the functional unit 106. The access operation is restarted based on the "correct" physical address which is present now on the address bus 138.

In most environments the page addresses change relatively rarely as compared to the total number of access operations. As a consequence the interruption of an access operation within the functional unit 106 which already begun is also a relatively rare event. As a consequence in most cases the "correct" physical address is available within a very short period of time on the address bus 138 which has a positive performance impact on the entire electronic system 100 and can improve performance dramatically.

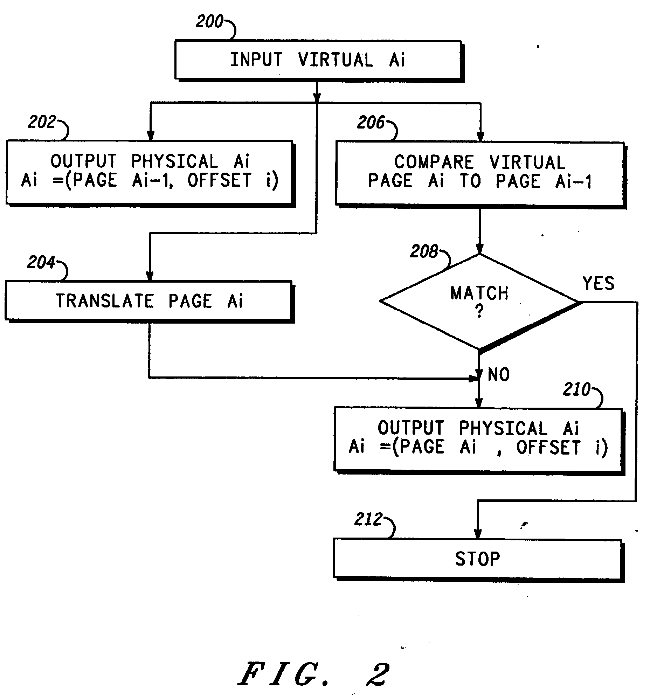

In the following a method according to the invention is explained in more detail with reference to FIG. 2. In step 200 the virtual address Ai to be translated is inputted. The following steps 202, 204 and 206 are carried out substantially simultaneously: In step 202 the physical address Ai which corresponds to the virtual address Ai is defined to equal the combination of the translated previous physical page address Ai-1 and of the current offset i. The translated previous physical page address Ai-1 is the physical page address of the virtual address Ai-1 which was translated before the current virtual address Ai.

The translation of the virtual page address of the current virtual address Ai to its physical page address Ai is performed in step 204. In step 206 the virtual page address Ai of the current virtual address Ai is compared to the previous virtual page address Ai-1 of the previous virtual address Ai-1. In step 208 it is decided whether there is a match or not. If there is not a match the control goes to step 210. In step 210 the physical address Ai is redefined to comprise the physical page address Ai which is found as a result of the translation of step 204 and the current offset i of the virtual address Ai. The redefined physical address Ai is outputted in step 210.

If there is a match in step 208, the control goes to step 212. The match indicates that the output of step 202 is already correct and that there is no need for redefining the physical address Ai and no need for another output operation. That is why the method stops in step 212 until a new virtual address Ai is inputted in step 200.

When a new virtual address Ai is inputted in a subsequent repetition of the method of Fig. 2 in step 200, the current virtual and physical addresses Ai become the previous virtual and physical addresses Ai-1 whereas the new virtual address Ai becomes the current virtual address Ai. Hence, the method shown in FIG. 2 can be carried out repeatedly if there is a continuous flow of virtual addresses Ai to be translated, such as in an instruction stream.

Those of skill in the art may change circuits and components without departing from the spirit and scope of this invention which is limited only by the appended claims.

## Claims

1. An electronic circuit for transforming a virtual address into a physical address, said virtual address comprising a virtual page address and an offset, said electronic, circuit comprising:
means for translating virtual page addresses;
first storage means for storing of a previous virtual page address;
second storage means for storing of a translated previous physical page address;
means for comparing said virtual page address to said previous virtual page address, said means for comparing being adapted to issue a control signal in response to a mismatch;
means for outputting said physical address, said physical address comprising said previous physical page address and said offset or in case that said control signal is issued said physical address comprising said translated physical page address and said offset.

2. The electronic circuit according to claim 1, said means for outputting being adapted to output said physical address comprising said previous physical page address and said offset in a first output operation and to subsequently output said physical address comprising said translated physical page address and said offset in a second output operation in case that said control signal is issued.

3. The electronic circuit according to claim 1, said means for translating virtual page addresses comprising a translation look-aside buffer.

4. An electronic system comprising
microprocessor means having an output for outputting a virtual address, said virtual address comprising a virtual page address and an offset, said output of said microprocessor being coupled to an address input of an electronic circuit for transforming said virtual address into a physical address;
said electronic circuit comprising:
means for translating virtual page addresses,
first storage means for storing of a previous virtual page address;
second storage means for storing of a translated previous physical page address;
means for comparing said virtual page address to said previous virtual page address, said means for comparing being adapted to issue a control signal in response to a mismatch;and
means for outputting said physical address at an output of said electronic circuit, said physical address comprising said previous physical page address and said offset or in case that said control signal is issued said physical address comprising said translated physical page address and said offset,
said electronic system further comprising a functional unit having an address input being coupled to said output of said electronic circuit.

5. The electronic system of claim 4 said means for translating comprising a translation look-aside buffer and said functional unit being a set associative cache.

6. A method for transforming a virtual address into a physical address, said virtual address comprising a virtual page address and an offset, said method comprising the steps of
defining said physical address to comprise a translated previous physical page address and said offset;
comparing said virtual page address to a previous virtual page address;
translating said virtual page address to a physical page address;
redefining said physical address in case of a mismatch between said virtual page address and said previous virtual page address to comprise said physical page address and said offset.

7. The method of claim 6 whereby said step of comparing and said step of translating are carried out at least partly in parallel.

8. The method of claim 7 further comprising the steps of
accessing a memory device after said step of defining with said physical address to initiate an output operation of memory data belonging to said address;
in case of a mismatch between said virtual page address and said previous virtual page address: interrupting said step of accessing and accessing said memory device again after said step of redefining said physical address.
